# EUROPEAN PATENT SPECIFICATION

(11) **EP 3 958 686 B1**
(45) Date of publication and mention of the grant of the patent: **02.10.2024**
(21) Application number: 20742743.6
(22) Date of filing: 22.07.2020
(51) Int. Cl.: A23G 1/32, A23G 1/40, A23G 1/46, A23G 3/36, A23G 3/38, A23G 3/42, A23G 3/46

(54) **CONFECTIONERY**
KONFEKT
CONFISERIE

(30) Priority: 26.07.2019 EP 19188493; 09.04.2020 EP 20169041
(43) Date of publication of application: 02.03.2022
(73) Proprietor: Société des Produits Nestlé S.A., 1800 Vevey (CH)
(72) Inventor: LIANG, Youyun, Singapore 618802 (SG)
(74) Representative: Slaven, John William
(86) International application number: PCT/EP2020/070724
(87) International publication number: WO 2021/018700

(56) References cited:
- EP-A1- 0 458 358
- EP-A1- 1 977 652
- EP-A1- 1 988 096
- EP-A1- 2 526 784
- EP-A2- 0 272 095
- WO-A1-2018/210821
- KR-A- 20150 057 104
- US-A1- 2004 086 615
- US-A1- 2007 082 104
- US-A1- 2013 288 261
- US-A1- 2014 227 393
- DUARTE P.M. TORRES ET AL: "Galacto-Oligosaccharides: Production, Properties, Applications, and Significance as Prebiotics", COMPREHENSIVE REVIEWS IN FOOD SCIENCE AND FOOD SAFETY, vol. 9, no. 5, 26 September 2010 (2010-09-26), pages 438 - 454, XP055099117, ISSN: 1541-4337, DOI: 10.1111/j.1541-4337.2010.00119.x

## Description

### Field of the invention

The present invention relates to confectionery comprising an oligosaccharide mixture, which is preferably derived from milk, and the confectionery is preferably a milk- and fat-based confectionery, preferably chocolate.

### Background of the invention

Any discussion of the prior art throughout the specification should in no way be considered as an admission that such prior art is widely known or forms part of common general knowledge in the field.

The increasing interest in reduced sugar intake in the diet by health conscious consumers has led to a strong demand for food products with lower sugars. Sugar, however, is a key food ingredient that in addition to imparting natural sweetness to food products also functions to provide bulk and therefore plays a significant role in the structure, volume and mouthfeel of the finished food product.

Sugar is a naturally occurring sweetener that as aforementioned provides the sweetness in food products that consumers crave but is also highly calorific and so there is an important need for healthier, non-caloric or low-caloric sweetener alternatives. There have been many approaches that are well known in the art, involving the replacement or reduction of sugars in food products, such as using artificial sweeteners to replace natural sugar. More particularly, for example, for fat based confectionery products such as chocolate, many attempts have been made to provide a substitute for sugar using reduced sugar alcohols or polyols. Other approaches have included using bulking agents such as, non or low-caloric fibres to replace sugar in chocolate compositions. These approaches however, have associated disadvantages, for instance, polyols are well known to have undesirable laxative effects and furthermore such artificial sweeteners are not well perceived by consumers who have a preference for clean label products. There are also certain disadvantages linked to the use of bulking agents to replace sugars in food products; this is mainly the associated undesirable impact on sweetness, usually a reduction in sweetness.

Thus, it is generally well known to those skilled in the art of food manufacturing that replacing or reducing sugar in a food composition usually negatively impacts the flavour, and other taste components. For instance, sugar replacers may be slower in onset of the sweetness perception and longer in duration compared to natural sugar and so therefore change the taste balance of a food composition.

In addition, sugar replacers may not deliver as sweet a taste as natural sugar and may also exhibit, metallic, cooling, astringent, liquorice-like, and bitter after tastes.

In a further example, applying the prior art solutions as aforementioned for fat based confectionery products may also result in similar disadvantages. For instance, using bulking agents such as certain fibres in chocolate compositions usually leads to bitter aftertastes and adds undesirable bulk to the mixture, resulting in an increase in the viscosity of the mixture. This in turn makes it difficult to carry out the standard post-processing of the mixture such as enrobing and moulding which are essential steps towards furnishing a finished chocolate product.

Additionally, sugar provides certain sensory and perception properties to products that are very hard to replicate with the above-mentioned sugar replacers. Hence, whilst the calorie content is reduced, the eating experience is often worsened. Proposed routes to overcome these issues often involve an increase in fat content, which offsets the potential health benefits.

Moreover, in milk-based confectionery, milk itself contains sugar, i.e. lactose. This also contributes to the sugar content of confectionery where milk is present. It is known to reduce the lactose content of milk using enzymes, for example. Indeed, lactose-free chocolate is also available. However, in order to compensate for the loss of lactose, it is generally necessary to substantially increase the fat content and/or introduce other bulking agents, which, in turn, impact the processing, nutritional value and organoleptic properties of the confectionery, as discussed above.

US2007/082104 describes a sugar replacement composition comprising a bulking fibre composition and a sweetener composition, whereby said bulking fibre composition comprises 30 to 60 weight % of polydextrose, based on the total weight of the sugar replacement composition, and 5 to 25 weight % of resistant maltodextrin, based on the total weight of the sugar replacement composition; and said sweetener composition comprises high intensity sweetener in an amount sufficient to provide to the sugar replacement composition a sweetness about equal to the sweetness of sugar.

US2004/086615 discloses a confectionery composition comprising at least about 25 wt. % fat and at least about 5 wt. % of an erythritol/FOS combination; wherein the erythritol/FOS combination includes erythritol and an FOS component; and the FOS component includes at least about 25 wt. % fructo-oligosaccharide having a DP greater than 20 and at least about 50 wt. % fructo/oligosaccharide having a DP less than 20.

KR2015 0057104 discloses a sugar-free chocolate comprising an outer shell comprising cacao liquor, palatinose and cacao butter, and a ganache filled in the shell and including fresh cream, red ginseng fermentation broth, milk cover, and oligosaccharides.

EP0272095 discloses a method for producing galactooligosaccharide characterized by reacting lactose with an enzyme or microorganism which can bring about the transfer reaction from said lactose to oligosaccharide.

EP2526784 discloses an oligosaccharide mixture derived from cow's milk comprising a) A soluble oligosaccharide population comprising the soluble oligosaccharide fraction found in cow's milk; b) β-galactooligosaccharides formed by the action of β-galactosidase on lactose and on cow's milk oligosaccharides, the mixture having a total monosaccharide content of less than 5% w/v and a lactose:total oligosaccharide ratio of less than 10.

US2014/227393 discloses a process for preparing a functional fermented milk product with low acidity and a low lactose content and enhanced with galactooligosaccharides and Bifidobacterium

US2013/288261 discloses a method of identifying, in vivo, a microbial strain that has a symbiotic relationship with a prebiotic, comprising administering at least one dose of the prebiotic to at least one subject; collecting a sample comprising gastrointestinal microbiota from the at least one subject; and identifying one or more microbial strains that are increased in the sample collected from the subject relative to a baseline sample collected from the subject.

EP0458358 discloses a skim milk powder of high galacto-oligosaccharide content containing galacto-oligosaccharide at a concentration of 5% by weight or more, obtained by a β-galactosidase treatment using skim milk as the starting material.

Duarte et al (2010) summarizes the state of art on galacto-oligosaccharides, their production, properties, applications, and significance as prebiotics.

There thus remains the problem of providing low calorie or reduced sugar alternative confectionery products without having a detrimental impact on the sweetness perception and/or any of the above associated problems of the prior art solutions.

Accordingly, there remains a need to find low calorie sugar replacers that can be used in a food product or confectionery compositions such as chocolate for example, which avoids the problems of loss or reduction in sweetness, bitter aftertastes and off-flavours and maintain organoleptic properties.

It is an object of the present invention to ameliorate at least one disadvantage of the prior art as aforementioned of previous reduced or low calorie confectionery alternatives.

### Summary of the invention

Accordingly, this need is solved by the features of the independent claims. The dependent claims further develop the central idea of the invention.

Thus, in a first aspect, the present invention relates to a confectionery material comprising a carbohydrate mixture, wherein the carbohydrate mixture is present in an amount greater than 0wt% and less than or equal to 35wt% of the confectionery material and the carbohydrate mixture comprises galactooligosaccharides, in an amount of 10-80wt% of the carbohydrate mixture.

Accordingly, the carbohydrate mixture may be used to replace sugar (e.g. sucrose), milk-based ingredients (e.g. skimmed milk powder) and combinations thereof in a confectionery product.

The carbohydrate mixture is derived from a milk product.

In a preferred embodiment, the carbohydrate mixture is prepared from a milk-substrate using an enzyme that has transglycosylation activity.

It has been surprisingly found by the inventors that the carbohydrate mixture derived from a milk product, for use in the present invention can be used to replace sugar (such as sucrose) and/or milk-based ingredients in a confectionery product without having a detrimental effect on the sweetness of the food product and also the organoleptic properties of the product, as well as not impacting the processing conditions for manufacture. This is a key advantage of the present invention, the reduction in sugar content without any loss in organoleptic properties, for example, no associated significant clagginess (i.e. stickiness or tacki ness).

In a further preferred aspect of the present invention, the confectionery product is chocolate.

In a further aspect of the present invention there is provided the use of a carbohydrate mixture, preferably derived from milk, as sugar and/or milk-based ingredient replacement composition suitable for partial or whole replacement of sugar and/or milk-based ingredients in a confectionery product, preferably in fat-based confectionery.

Advantageously the particles of the present invention can be used as a lower calorie sugar alternative. Thus, the present invention provides the reduction of sugar in food products without the need to use artificial sweeteners and/or conventionally known bulking agents.

### Detailed description of the invention and the preferred embodiments

As mentioned above, the present invention provides a confectionery material comprising a carbohydrate mixture, wherein the carbohydrate mixture is present in an amount of greater than and not including 0wt% and less than or equal to 35wt% of the confectionery material and the carbohydrate mixture comprises galactooligosaccharides, in an amount of 10-80wt% of the carbohydrate mixture.

In a preferred embodiment, the confectionery material comprises at least 1.0%, at least 2.5%, at least 5.0%, at least 10.0%, at least 12.5% or at least 15.0% of the carbohydrate mixture on a dry weight basis based on the weight of the confectionery material.

In a preferred embodiment, the confectionery material comprises less than 32.5%, less than 30.0%, less than 27.5%, less than 25.0%, or less than 20.0% of the carbohydrate mixture on a dry weight basis based on the weight of the confectionery material. For example, at least 1.0% and less than 32.5%.

In a preferred embodiment, the confectionery material contains non-carbohydrate milk solids (e.g. fat and protein) in an amount of greater than 0wt%, at least 1.0%, at least 2.5%, at least 5.0%, at least 10.0%, at least 12.5% or at least 15.0% of the non-carbohydrate milk solids on a dry weight basis based on the weight of the confectionery.

In a preferred embodiment, the confectionery material comprises less than 35.0wt%, less than 32.5%, less than 30.0%, less than 27.5%, less than 25.0%, or less than 20.0% of the non-carbohydrate milk solids on a dry weight basis based on the weight of the fat based confectionery. For example, at least 1.0% and less than 32.5%.

The carbohydrate mixture is derived from a milk product.

Preferably, the mixture is obtained by treating a milk product with an enzyme that has transglycosylation activity, e.g. a mechanism for glycosidic link formation, particularly during oligiosaccharide and/or polysaccharide synthesis.

In a preferred embodiment, the carbohydrate mixture and non-carbohydrate milk solids are from the same origin. In a preferred embodiment, the carbohydrate mixture is derived from treating a milk product with an enzyme that has transglycosylation activity.

In a preferred embodiment, the milk product is a skimmed milk. The skimmed milk may have a fat content below 1.5% on a dry weight basis, for example below 1.2%.

The milk powder particles for use in the invention may have a moisture content between 0.5 and 6%, for example between 1 and 5%, for further example between 1.5 and 3%. The moisture content of the milk powder may be measured using known techniques, e.g. Karl Fischer.

Preferred aspects of the invention are described in more detail below.

### Oligosaccharide Compositions and Milk Product

The invention preferably uses a mixture of carbohydrates as an ingredient in a confectionery material, preferably a fat-based confectionery product or preferably a milk-based confectionery product, most preferably a fat- and milk-based confectionery product. The carbohydrate mixture comprises oligosaccharides.

In an embodiment, the confectionery material may contain carbohydrates from other sources, e.g. sucrose. Accordingly, in an embodiment, the present invention encompasses compositions where a carbohydrate mixture within the scope of the claim set is present irrespective of other carbohydrates present.

The term `oligosaccharide' means a saccharide oligomer containing a small number (typically two to ten) of component monosaccharides.

Specifically, oligosaccharides (OS) are herein defined as those found naturally in animal milks and/or those synthetically produced and having a degree of polymerisation (DP) ranging from 2 to 20. The term 'synthetic' means a process of chemical and/or biological (e.g. enzymes) means. These oligosaccharides may be soluble in milk. The invention utilises an oligosaccharide mixture, preferably derived from cow's milk, wherein the mixture has a lactose: to non-lactose oligosaccharides weight ratio of less than 20:1, more preferably less than 10:1, more preferably less than 5:1, more preferably less than 1:1, more preferably less than 1:5, more preferably less than 1:10 and more preferably less than 1:20. In an embodiment, the mixture used corresponds to a 4 to 200 times decreased lactose content in the oligosaccharide mixture as compared to the original milk, which is equivalent to a 4 to 200 times increased ratio between oligosaccharides and lactose.

The carbohydrate mixture for use in the invention contains galactooligosaccharides (GOS), preferably comprising β-GOS and/or *α*-GOS and mixtures of such linkages in the GOS, preferably resulting from the action of an enzyme, preferably one having transglycosylation activity, preferably also acting as a *β*-galactosidase, mainly on lactose and optionally also, but to a much lesser extent, on some of the soluble oligosaccharides present in the milk.

In a preferred embodiment, therefore, the galactooligosaccharides result from the action of the *β*-galactosidase on lactose and on milk oligosaccharides. The enzyme is preferably added during the production of the oligosaccharide mixture. The enzyme preferably has a twofold activity: it breaks down lactose into the monosaccharides, galactose and glucose and, secondly, via a transferase activity, it catalyses the subsequent formation of galactooligosaccharides. These oligosaccharides are preferably made from glucose and galactose monomers, having a DP of from 2 to 10, preferably from 3 to 10 or preferably from 2 to 6 and preferably have a prebiotic activity.

In a preferred embodiment, the GOS used in in the carbohydrate mixture of the present invention as the following composition (DP degree of polymerization, all % by weight based on the wt% of DP2-6 measured using the method described in the examples):
- a DP2 of between 20% and 40%, preferably between 25% and 35%, preferably between 27.5% and 32.5%;
- a DP3 of between 25%, and 55%, preferably between 30% and 50%, preferably between 35% and 45%;
- a DP4 of between 7.5% and 27.5%, preferably between12.5% and 22.5%, preferably between 15% and 20%;
- a DP5 of between 2.5% and 15%, preferably between 3% and 12.5%, preferably between 4% and 10%; and
- a DP6 2.6% of between 0% and 10%, preferably between 1% and 5%, preferably between 1.5% and 4%.

In a preferred embodiment, the above DP2 content does not contain lactose, as is clear from the known definition of GOS.

Alternatively, the carbohydrate mixture may be prepared from individual components or commercially available sources that match the profile required by the present invention. For example, Bimuno^{®} GOS. In this case, if non-carbohydrate milk solids are also required to be present, they can be provided, for example, by lactose-free skimmed milk powder or milk protein concentrate. The commercially available GOS may need further processing, e.g. drying, dependent on form to be used in confectionery, e.g. chocolate-products.

The oligosaccharide profile may be characterised by HPLC, Mass Spectrometry and other methods. According to a preferred HPLC method, the oligosaccharides present in the samples are extracted in water at 70°C. The extracted OS are fluorescently labeled by reaction (2h at 65°C) of 2-anthranilic acid amide via formation of a Schiff's base. The double bond is then reduced by reaction with sodium cyanoborohydride to give a stable oligosaccharide aminobenzide (OS-AB) derivative. Labelled extracts are diluted with acetonitrile prior to injection on a HPLC-fluorimeter instrument equipped with a trapping column. Separation is performed on Amide-80 3µm, 4.6x150 mm column, and labeled OS are detected on a fluorimeter at: Ex 330 nm, Em 420 nm. Quantification of the different OS is performed by calibration of the OS-2AB response with maltotriose external standard and using laminaritriose as internal standard.

At most 40wt% of the carbohydrates in the mixture is lactose, preferably at most 30wt%, and preferably at most 20wt% based on the weight of the mixture of carbohydrates. In another preferred embodiment, 0-30wt%, preferably 0-20wt%, of the total carbohydrates in the carbohydrate mixture is lactose.

For example, in an embodiment, at most 15wt% or at most 10wt% of the total carbohydrates in the mixture is lactose. In another embodiment, from 0wt% to 15wt% or 2wt% to 10wt% of the total carbohydrates in the mixture is lactose.

In an embodiment, the oligosaccharide composition for use in the invention comprises DP2+ (degree of polymerisation of 2 or more, i.e. 2 or more saccharide units), preferably DP3+, GOS in an amount of at least 20wt% of the total carbohydrate mixture.

In a preferred embodiment, at least 25wt% of the total carbohydrates is DP2+, preferably DP3+, GOS, preferably at least 30wt%, preferably at least 35wt%, preferably at least 40wt% or preferably at least 45wt%.

Accordingly, the carbohydrate mixture comprises galactooligosaccharides in an amount of 10-80wt% of the carbohydrate mixture and 20-80wt% of the total carbohydrates are DP2+, preferably DP3+, galactooligosaccharides.

Hence, in this preferred embodiment, the oligosaccharide component is GOS. In a preferred embodiment, 10-100wt%, preferably 20-95wt%, preferably 20-90wt%, preferably 20-95wt%, preferably 20-80wt%, preferably 30-70wt%, of the carbohydrate mixture is GOS.

In an embodiment, the amount of GOS may be obtained using the AOAC 2001.02 method or by the method described in International Journal of Analytical Chemistry, Volume 2014, Article ID 768406, Austin et. al.

In an embodiment, the present invention utilises a carbohydrate mixture, which has the following carbohydrate composition expressed as dry matter percentage by weight of the mixture:
a. Lactose 0-40%
b. Glucose 0-40%
c. Galactose 0-40%
d. Galactooligosaccharides, 10-100%, preferably 10-80%.

In an embodiment, the present invention utilises a carbohydrate mixture, which has the following carbohydrate composition expressed as dry matter percentage by weight of the mixture:
a. Lactose 2-30%
b. Glucose 5-30%
c. Galactose 0-20%
d. Galactooligosaccharides, 30-80%.

In an embodiment, the present invention utilises a carbohydrate mixture, which has the following carbohydrate composition expressed as dry matter percentage by weight of the mixture:
a. Lactose 3-20%
b. Glucose 10-30%
c. Galactose 1-10%
d. Galactooligosaccharides, 45-70%.

In an embodiment, the present invention utilises a carbohydrate mixture, which has the following carbohydrate composition expressed as dry matter percentage by weight of the mixture:
a. Lactose 3-15%
b. Glucose 10-25%
c. Galactose 1-5%
d. Galactooligosaccharides, 50-70%.

In an embodiment, the present invention utilises a carbohydrate mixture, which has the following carbohydrate composition expressed as dry matter percentage by weight of the mixture:
a. Lactose 0-10%
b. Glucose 10-30%
c. Galactose 0-10%
d. Galactooligosaccharides, 45-90%.

It will be appreciated that the above amounts cannot exceed 100%, and the amount of one or more of the components a. to d. must be varied to ensure that the total amount does not exceed 100%, e.g. if component d. is 70%, component b. can only be 30% in the embodiments where a. and c. may be 0%. Additionally, in an embodiment, the amounts of a. to d. equal 100%.

In an embodiment, the mixture has a moisture content of less than 5%, preferably between 0.5% and 5% (for example between 2% and 3%). This may be measured by Karl Fischer methods.

As mentioned above, the carbohydrate mixtures for use in the present invention may be prepared from a milk product. Accordingly, the milk product for use in the invention may be concentrated milk, such as condensed milk, or spray-dried concentrated milk. In a preferred embodiment, the milk product is milk powder, preferably skimmed milk powder.

In an embodiment, the confectionery material comprises greater than and not including 0wt% of the milk product comprising the carbohydrate mixture based on the weight of the confectionery material, preferably greater than 1.0wt%, preferably greater than 5wt%, preferably greater than 10wt%, preferably greater than 20wt%, preferably greater than 25wt% or greater than 30wt%.

In an embodiment, the confectionery material comprises less than 75wt% of the milk product comprising the carbohydrate mixture based on the weight of the confectionery material, preferably less than 65wt%, preferably less than 60wt%, preferably less than 55wt%, preferably less than 50wt%, less than 45wt% or less than 40wt%. For example, greater than and not including 0wt% and less than 75wt%.

In an embodiment, the milk product comprises greater than 10wt% of the carbohydrate mixture by weight of the milk product, preferably greater than 15wt%, preferably greater than 20wt%, preferably greater than 30wt% and preferably greater than 40wt%.

In an embodiment, the milk product comprises less than 90wt%, preferably less than 80wt%, preferably less than 70wt%, preferably less than 60wt% and preferably less than 55wt% of the carbohydrate mixture by weight of the milk product. For example, between 10wt% and 90wt%.

Hence, in a highly preferred embodiment, the present invention provides a confectionery material, very preferably a chocolate product:
- comprising a milk product of the present invention in an amount of greater than and not including 0wt% and less than 75wt%, preferably greater than 15wt% and less than 50wt%, and
- the milk product comprises between 10wt% and 90wt% based on the weight of the milk product of the carbohydrate mixture of the present invention, preferably between 30wt% and 70wt% and more preferably between 40wt% and 55wt%.

It is noted that in an embodiment, the carbohydrate mixture is derived from lactose present in the milk product. It is noted that lactose contents of full fat milk may be approximately between 35wt% and 40wt% of the solid content and for skimmed milk powder approximately between 45wt% and 55wt%. The treatment of the present invention converts this lactose to a carbohydrate mixture, i.e. does not create mass. However, using known techniques, other solid components (e.g. fat and protein) may be removed from the milk product to relatively increase the amount of carbohydrate mixture.

In an embodiment, the treated, preferably enzyme treated, milk product for use in the invention comprises at least 5wt% of DP2+, preferably DP3+, GOS based on the weight of the milk product. In a preferred embodiment, the milk product comprises a total amount of at least 10wt%, preferably at least 15wt%, preferably at least 20wt% and preferably at least 25wt%.

In a preferred embodiment, the milk product comprises 5-60wt%, preferably 10-50wt% or 15-45wt%, of DP2+, preferably DP3+, GOS based on the weight of the milk product.

In a preferred embodiment, the milk product preferably comprises a total amount of at most 20wt%, preferably at most 10wt%, preferably at most 5wt%, lactose based on the weight of the milk product. The lactose content of the milk product may be determined by AOAC 930.28 (2000).

In a preferred embodiment, at most 50wt% of the total carbohydrates in the milk product is lactose, preferably at most 30wt%, preferably at most 20wt% and more preferably at most 15wt%. In another preferred embodiment, 0-30wt%, preferably 0-20wt% and more preferably 0-10wt%, of the total carbohydrates in the milk product is lactose.

In another embodiment, at most 15wt% or at most 12wt% of the total free carbohydrates in the milk product is lactose. In another embodiment, 0-15wt% or 2-12wt% of the total free carbohydrates in the milk product is lactose.

In a preferred embodiment of the present invention, the milk product is milk powder, preferably skimmed milk powder, comprising a total amount of at least 10wt% of DP2+, preferably DP3+, GOS by weight of the milk powder, preferably at least 15wt%, more preferably at least 20wt%.

In a preferred embodiment of the present invention, the milk product is milk powder, preferably skimmed milk powder, comprising a total amount of 10-50wt% of DP2+, preferably DP3+, GOS by weight of the milk powder, preferably 15-45wt% or 15-40wt%, more preferably 20-40wt%.

In an embodiment, the present invention utilises a milk product, which has the following carbohydrate composition expressed as dry matter weight percentage of the milk product:
a. Lactose 0-20%
b. Glucose 0-30%
c. Galactose 0-10%
d. Galactooligosaccharides, 5-60%.

In an embodiment, the present invention utilises a milk product, which has the following carbohydrate composition expressed as dry matter weight percentage of the milk product:
a. Lactose 2-15%
b. Glucose 5-20%
c. Galactose 0-7.5%
d. Galactooligosaccharides, 10-50%.

In an embodiment, the present invention utilises a a milk product, which has the following carbohydrate composition expressed as dry matter weight percentage of the milk product:
a. Lactose 3-10%
b. Glucose 7.5-15%
c. Galactose 1-5%
d. Galactooligosaccharides, 15-45%.

In the above embodiments, preferably the remainder of the milk product is non-carbohydrate milk solids (e.g. fat and protein) to total 100wt% of the milk product.

In embodiments of the present invention, it will be appreciated that a sum of the above amounts cannot exceed the total amount of the carbohydrate mixture present in the milk powder nor can they exceed 100% of the milk powder.

In the above embodiments, the amount of carbohydrate mixture in the milk product and the amount of milk product in the confectionery is selected so that the carbohydrate mixture is present in an amount greater than and not including 0wt% and less than or equal to 35wt% of the confectionery material.

As mentioned above, the carbohydrate composition and/or the milk product is preferably in the form of powder, preferably they have a particle size that is comparable to standard milk powders. Accordingly, in a preferred embodiment, the carbohydrate composition and/or the milk product has a d90 value of between 100 and 300 microns, preferably between 150 and 250 microns. In a further preferred embodiment, the carbohydrate composition and/or the milk product has a d10 value of between 10 and 75 microns, preferably between 15 and 60 microns. The term dX is a diameter where X% of the mass of the particles in the sample have a diameter below that value. Preferably, laser diffraction is used to measure the particle size, d90 or d10 using a Malvern Mastersizer 2000, Method Scirocco 2000 dry attachment, Fraunhofer scattering theory. These particle sizes may be modified in chocolate manufacture, for example, as described below in respect of refining.

In an embodiment, the milk product for use in the present invention has optionally been subjected to treatments known in the art, for example, pasteurization, demineralisation, filtration, for example, ESL treatment or UHT treatment.

In a preferred embodiment, the present invention provides a confectionery material comprising:
- a milk product comprising a carbohydrate mixture in an amount of between 10wt% and 90wt% of the milk product,
- the milk product is present in an amount of greater than and not including 0wt% and less than 75wt% of the confectionery product,
- wherein the amount of carbohydrate mixture in the milk product and the amount of milk product in the confectionery is selected so that the carbohydrate mixture is present in an amount greater than and not including 0wt% and less than or equal to 35wt% of the confectionery material, and
- the carbohydrate mixture comprises galactooligosaccharides, in an amount of 10-100wt%, preferably 10-80wt%, of the carbohydrate mixture.

### Carbohydrate Mixture Production

The invention preferably utilises a method for producing a milk product, which comprises:
(a) providing a milk substrate comprising a total solids content of between 40wt% and 75wt%, preferably wherein the milk substrate comprises at least 15wt% lactose based on a dry solids content;
(b) treating the milk substrate with an enzyme having transglycosylation activity, and
(c) optionally fully or partially inactivating the enzyme.

In a preferred embodiment, the milk substrate is used to provide a milk product comprising the carbohydrate mixture used in the invention.

In a method of the present invention, a milk product is produced from a milk substrate by contacting the milk substrate comprising lactose with a transglycosylation enzyme which converts lactose in the milk substrate to GOS.

The milk substrate to be used in the method is based on milk. The term 'milk', in the context of the present invention, is to be understood as the aqueous, lactose, protein and fat-based secretion obtained by milking any mammal, such as cows, sheep, or goats.

In one embodiment, the milk substrate is obtained from milk which has been modified in composition by adjustment of fat content, protein content, lactose content and/or water content. Adjustment of fat content and/or water may have been done by any method known in the art, e.g., by centrifugation, evaporation, condensation, ultrafiltration, nanofiltration, freeze-drying, spray-drying, reconstitution by addition of water, etc. Example methods are given, for example in 'The Technology of Dairy Products', edited by Ralph Early.

In an embodiment, the milk substrate comprises at least 40wt%, preferably at least 45wt%, at least 50wt%, at least 55wt%, at least 57wt%, or at least 60wt%, total solids.

In a preferred embodiment, the total solids content of the milk substrate is less than 75wt%, preferably less than 70wt% and preferably less than 60wt%.

In a preferred embodiment, the milk substrate is reconstituted milk powder, such as reconstituted skimmed milk powder, or concentrated milk, such as condensed milk, which comprises at least 40wt%, preferably at least 45wt%, at least 50wt%, at least 55wt%, at least 57wt%, or at least 60wt% total solids.

The milk substrate preferably comprises at least 15wt% lactose based on a dry matter percentage of the solids present in the substrate. In a preferred embodiment, the milk substrate comprises at least 20wt%, preferably at least 25wt% or at least 30wt%.

In a preferred embodiment, the milk substrate is contacted with the enzyme for at least 15 minutes, preferably for at least 45 minutes, preferably for at least 55 minutes, preferably for at least 1 hour, preferably at least 1.5 hours, or at least 3 hours. In an embodiment, the contacting time is less than 15 hours, preferably less than 10 hours or less than 5 hours.

In a preferred embodiment, the milk substrate is contacted with the enzyme at a temperature of at least 35°C, preferably at least 40°C, preferably at least 45°C, or at least 50°C. In a preferred embodiment, the milk substrate is contacted with the enzyme at a temperature of equal to less than 75°C.

In a preferred embodiment, the milk substrate is contacted with an enzyme at a temperature of between 35°C and 75°C, for 45 minutes to 10 hours, preferably 2-5 hours.

In a preferred embodiment, the enzyme is added in an amount of between 0.05% and 10% by weight of the lactose content, for example between 0.1% and 7.5% by weight or between 0.25% and 5% by weight.

The enzyme for use in the present invention is preferably one with *β*-galactosidase activity.

The enzyme for use in the present invention is preferably one that catalyses the transfer of a mono-, di- or oligosaccharide entity onto a mono-, di- or oligosaccharide substrate resulting in the formation of saccharide-entities of 2 or more subunits connected through glycoside link(s). In a preferred embodiment, the enzyme has transglycosylation activity.

One enzyme may be used or a mixture of more than one enzyme may be used in the present invention.

Specifically, the enzyme is preferably a glycosidase (EC. 3.2.1.), preferably a *β*-Galactosidase (EC. 3.2.1.23) or Lactase (EC. 3.2.1.108), catalysing the transgalactosylation reaction of a D-galactose moiety, a lactose molecule or a GOS (Galactooligosaccharide) onto a D-galactose moiety obtained from lactose by a proceeding 1^{st} step of disconnection reaction of the glycosidic link of lactose catalysed by the same enzyme.

Such enzymes are commercially available, e.g. Maxilact A4^{®} (DSM), GODO-YNL 2^{®} (DuPont), lactozyme^{®} etc. The enzyme may be used in any format, e.g. liquid, paste or powder.

Hence, in an embodiment, the enzyme having transglycosylation activity is added at a concentration of 11,000 U per g lactose, preferably 5-500 U per g lactose, more preferably 8-150 U per g lactose, whereby 1 U is defined as the as the amount of the enzyme that catalyzes the conversion of one micromole of lactose per minute under the specified conditions of an assay method. The activity in U of a specific enzyme may be determined by direct measurement of the formation of galacto-oligosaccharides from the lactose. The assay method preferably being a 60% (w/v) skimmed milk powder solution in water, at 60 °C for 60 minutes. Preferably, 1 U is the amount of enzyme that will catalyze the conversion of one micromole of lactose per minute under the aforementioned conditions. Preferably, 1 U enzyme will catalyse 0.342mg per minute a 60% (w/v) skimmed milk powder solution in water, at 60 °C for 60 minutes. The activity in U of a specific enzyme may be determined by direct measurement of the formation of galacto-oligosaccharides from the lactose using a method such as liquid chromatography.

After the treatment period, the enzyme is preferably fully or partly inactivated. The enzyme may be inactivated by any state of the art method, for example, by heat treatment, pH lowering (e.g. to below pH 4) or lowering water activity. The inactivation may occur due to a step in the production process of the milk product or the confectionery product, preferably in pasteurization or spray-drying.

In a preferred embodiment, the enzyme is fully or partly inactivated by heat treatment, preferably at between 75°C and 100°C for between 3 and 15 minutes.

In a preferred embodiment, after enzyme treatment, the milk product obtained may be further processed by methods known in the art, preferably pasteurization, homogenisation and/or drying, preferably spray-drying.

In a preferred embodiment, the solution prepared by steps (a) to (c) is dried to provide a solid for combination with other ingredients of the confectionery material.

In an alternative embodiment it is plausible that other known procedures may be used to carry out the process of the present invention for example, foam drying, freeze drying, tray drying, fluid bed drying, vacuum drying and the like.

In an embodiment, the carbohydrate mixture may be provided by combining the individual components in the required amounts.

In a preferred embodiment, the carbohydrate mixture may be combined with other components of milk to provide an alternative source of the milk product. For example, in an embodiment, the milk product is prepared by combining a carbohydrate mixture prepared by individual component combination with a milk protein concentrate.

In this embodiment, the total wt% of milk product in the confectionery material is the sum of the milk protein concentrate and the carbohydrate mixture.

In an embodiment, the milk protein concentrate may be present at an amount of between 5wt% and 30wt% of the confectionery product, preferably between 7.5wt% and 25wt% and preferably between 10wt% and 20wt%.

In an embodiment, the above amounts of milk protein concentrate are equally applicable to the protein contents of milk products prepared by the method of the present invention.

### Confectionery Materials

The present invention relates to confectionery materials that contain milk, ingredients derived from milk and combinations thereof. Preferably, fat-based confectionery that contain ingredients derived from milk.

The carbohydrate mixture of the present invention is derived from a milk product that is typically used in a confectionery. Accordingly, in an embodiment, the treated milk product or corresponding components (e.g. milk protein concentrate, GOS etc.) are added to the confectionery product to at least partially replace the milk ingredient of the confectionery material. Accordingly, in an embodiment, the replacement is between 10wt% and 100wt% of non-fat milk solids in the confectionery material, preferably between 25wt% and 100wt%, preferably between 50wt% and 100wt%, preferably between 75wt% and 100wt% of the non-fat milk solids.

For example, the present invention relates to chocolate, compound, pralines, water- or fat-based confectionery fillings, ganache, toffee ('caramel candy'), fudge, caramel analogues (e.g. Caramac^{®}), chocolate truffles, Scottish tablet, hard candy (e.g. caramel hard candy and milk chews) etc.

In an embodiment, the fat based confectionery material, preferably chocolate compositions, of the present invention comprises cocoa butter by weight of the confectionery material in at least 5.0% by weight, preferably at least 10.0% by weight, preferably at least 13.0% by weight, more preferably at least 15.0% by weight, for example at least 17.0% or at least 20%.

The preferred maximum amount of cocoa butter present in the fat based confectionery material, chocolate compositions, of the present invention is less than 35.0% by weight, preferably not more than 30.0% by weight, more preferably not more than 30.0% by weight, and most preferably not more than 25.0% cocoa butter by weight of the confectionery material. For example, between 10.0wt% and 35.0wt% of the confectionery material.

Generally, the fat based confectionery material, preferably chocolate compositions, of the present invention comprises at least 10.0% by weight, preferably at least 13.0% by weight, more preferably at least 15.0% by weight, and even more preferably at least 17.0% cocoa mass by weight of the composition.

The preferred maximum amount of cocoa mass present in the fat based confectionery material, preferably chocolate compositions, of the present invention is less than 35.0% by weight, preferably not more than 30.0% by weight, by weight, and most preferably not more than 25.0% cocoa mass by weight. For example, between 10.0wt% and 35.0wt% of the confectionery material.

If the chocolate product is a white chocolate product, the amount of cocoa mass is lower than that above, preferably not present. The cocoa mass may be partially or fully replaced by the milk product for use in the present invention.

In an embodiment, the fat based confectionery material, preferably chocolate compositions, of the present invention comprises at least 1.0% by weight, preferably at least 1.3% by weight, more preferably at least 1.5% by weight, and even more preferably at least 1.7% milk fat by weight of the confectionery material.

The preferred maximum amount of milk fat present in the fat based confectionery material, preferably chocolate compositions, of the present invention is less than 10.0% by weight, preferably not more than 7.5% by weight, more preferably not more than 6.0% by weight, and most preferably not more than 5.0% milk fat by weight of the confectionery material. For example, between 1.0% and 10.0wt% of the confectionery material.

The milk fat may be added separately to the composition and/or be present in any milk-based product added, e.g. milk powder. In a preferred embodiment, the milk fat is present in the milk product obtained by enzyme treatment, as described above, and is also added separately.

According to the present invention the term sugar as used herein refers to as is conventionally understood a sweet crystalline substance obtained from various plants, especially sugar cane and sugar beet, and used as a sweetener in food and drink. In the context of the present invention sugar is defined as and includes all mono, di and oligosaccharides, preferably mono- and di-saccharides, for example sucrose, fructose, glucose, dextrose, galactose, allulose, maltose, high dextrose equivalent hydrolysed starch syrup, xylose, and combinations thereof.

Accordingly, the sugar used within the invention may be selected from the group consisting of sucrose, fructose, glucose, dextrose, galactose, allulose, maltose, high dextrose equivalent hydrolysed starch syrup, xylose, and any combinations thereof.

In the present invention, the aim is to reduce the sugar content of the fat based confectionery, however, the confectionery may still contain sugar (e.g. sugar not derived from the milk solids). In a preferred embodiment, the confectionery comprises less than 40.0wt% sugar, preferably less than 35.0wt%, preferably less than 30.0wt%, preferably less than 25.0wt%, preferably less than 20wt%, and preferably less than 15.0wt%. For example, between 0.0wt% and 40.0wt% or between 5.0wt% and 40.0wt% or between 10.0wt% and 40.0wt%, preferably between 0.0wt% and 20.0wt%, and preferably between 0.0wt% and 15.0wt%.

In a preferred embodiment, fat content of the confectionery product is greater than 15% by weight of the confectionery product, greater than 20%, or greater than 25%. In a preferred embodiment, fat content of the fat based confectionery product is less than 45% of the confectionery product, less than 40%, less than 35% or less than 30%. For example, between 15wt% and 45wt%.

The confectionery material of the present invention may contain a bulking agent. According to the present invention the term bulking agent as used herein refers to as is conventionally understood a food additive that increases food volume or weight without impacting the utility or functionality of a food. In a particularly preferred embodiment of the present invention, the bulking agents for use in the present invention are low or non-calorific additives, which impart bulk and provide advantageously healthier alternatives to for example sugar.

According to conventional understanding bulking agents may be used to partially or completely replace high-caloric ingredients, such as sugar to prepare an edible formulation with a reduction in calories. Additionally, the bulking agents are useful as a source of soluble fibre to be incorporated into foods and, unlike sugar, are non-cariogenic.

According to the present invention the bulking agent may be selected from the group consisting of polyols (sugar alcohols for example isomalt, sorbitol maltitol, mannitol, xylitol, erythritol and hydrogenated starch hydrolysates) guar gum, psyllium husk, carnuba wax, glycerin, beta glucan, polysaccharides (such as starch or pectin for example), dietary fibres (including both insoluble and soluble fibres) , polydextrose, methylcellulose, maltodextrins, inulin, milk powder (for example skimmed milk powder) (this different from the milk powder described above), whey, demineralised whey powder, dextrins such as soluble wheat or corn dextrin (for example Nutriose^{®}), soluble fibre such as Promitor^{®} and any combination thereof.

In a preferred embodiment of the present invention the bulking agent may be selected from the group consisting of maltodextrins, milk powder (for example skimmed milk powder (SMP)), demineralised whey powder (DWP), soluble wheat or corn dextrin (for example Nutriose^{®}), polydextrose, soluble fibre such as Promitor^{®} and any combinations thereof.

In an embodiment of the present invention, amorphous sucrose may be present. In an embodiment, the amorphous sucrose is in the form of amorphous particles comprising sucrose, a bulking agent and optionally a surfactant. In an embodiment of the present invention, the amorphous particles of WO2017093309 or WO2017093309 may also be included in the fat based confectionery.

The bulking agent may be present in an amount of between 1.0% and 40% or 3.0wt% and 30.0wt% or 5.0wt% and 20.0wt% or 5.0wt% and 10.0wt%, for example.

However, preferably, a bulking agent is not present, e.g. substantially not present, in the confectionery compositions.

According to the present invention, the confectionery material is prepared according to conventional confectionery making processes as will be well known and obvious to a person skilled in the art.

Additionally, the present invention provides a method of manufacturing a confectionery material comprising the carbohydrate mixture described above, the method comprising mixing the carbohydrate mixture described above with fat and optionally ingredients selected from the group consisting of cocoa liquor/mass, crystalline sugar, lecithin and combinations of these; refining the resulting mixture to reduce the particle size of the components; and mixing the refined mixture with further fat and optionally lecithin and liquefying.

The fat may for example be cocoa butter, cocoa butter equivalent or cocoa butter replacer. The fat may be cocoa butter. Some or all of the milk powder, cocoa liquor and crystalline sugar may be replaced by chocolate crumb. In a preferred embodiment, the liquefaction is carried out by conventional means well known to a person skilled in the art and refers to conching, a standard process in chocolate manufacture. In a preferred embodiment, 15% to 30% of the total fat present after liquefying is used in the final step.

In an embodiment, the chocolate composition of the present invention may be refined using known equipment as applicable. In a preferred embodiment, the chocolate is refined to ensure a non-grainy texture. For example, the refining may be carried out to achieve a particle size (D90 measured by a Malvern Mastersizer 3000) of less than 50 microns, preferably between 15 microns and 35 microns. Preferably a Malvern Mastersizer 2000, Method Scirocco 2000 dry attachment, Fraunhofer scattering theory is used.

In an embodiment, the traditional conching process is used to prepare the chocolate. In a preferred embodiment, the temperature in the conching step does not exceed 60°C, preferably does not exceed 57.5°C and preferably does not exceed 56°C. By controlling the temperature during this step, degradation of the carbohydrate mixture is avoided and the texture of the final product is not grainy nor is taste impacted. In a preferred embodiment, the temperature is greater than 30°C, preferably greater than 35°C or greater 40°C or greater than 45°C.

In an embodiment, the conching is carried out for a period of greater than 1.5 hours, preferably greater than or equal to 2 hours, preferably greater than or equal to 2.5 hours. In an embodiment, the conching is carried out for a period of less than 8 hours, preferably less than 6 hours.

In an embodiment, the conching is carried out for a period of between 1.5 hours and 8 hours at a temperature between 30°C and 60°C.

In an embodiment, the conching speed is between 200 rpm and 2000 rpm, preferably between 400 rpm and 1600 rpm. This may be varied across the conching process.

### General Definitions

In an embodiment, compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as 'milk chocolate' (which term also encompasses other analogous chocolate products, with similar amounts of cocoa-solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa-solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate-like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

In an embodiment, the chocolate product composition comprises:
8-12% of cocoa mass
34-58% of sugar, preferably sucrose
18-25% of cocoa butter
3.5-6.5% of milk fat
15-30% of the milk product of the present invention
0.3-0.5 of lecithin

In an embodiment, the chocolate product composition comprises:
37-50% of sugar, preferably sucrose
18-24% non-fat milk solids
4-7% of milk fat
22-35% of (optionally deodorised) cocoa butter
20-40% of the milk product of the present invention
0.2-0.5 of lecithin

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

The term 'choco-coating' as used herein (also refers to a `choco-shell') denotes coatings made from any chocolate product. The terms 'chocolate coating' and 'compound coating' may be defined similarly by analogy. Similarly the terms `choco-composition, (or mass)', 'chocolate composition (or mass)' and 'compound composition (or mass)' denote compositions (or masses) that respectively comprise chocolate product, chocolate and compound as component(s) thereof in whole or part. Depending on their component parts the definitions of such compositions and/or masses may of course overlap.

The term 'chocolate product confectionery' as used herein denotes any foodstuff which comprises chocolate product and optionally also other ingredients and thus may refer to foodstuffs such confections, wafers, cakes and/or biscuits whether the chocolate product comprises a choco- coating and/or the bulk of the product. Chocolate product confectionery may comprise chocolate product in any suitable form for example as inclusions, layers, nuggets, pieces and/or drops. The confectionery product may further contain any other suitable inclusions such as crispy inclusions for example cereals (e.g. expanded and/or toasted rice) and/or dried fruit pieces.

The chocolate product of the invention may be used to mould a tablet and/or bar, to coat confectionery items and/or to prepare more complex confectionery products. Optionally, prior to its use in the preparation of a chocolate product confectionery product, inclusions according to the desired recipe may be added to the chocolate product. As it will be apparent to a person skilled in the art, in some instances the product of the invention will have the same recipe and ingredients as the corresponding composition and/or mass while in other instances, particularly where inclusions are added or for more complex products, the final recipe of the product may differ from that of the composition and/or mass used to prepare it.

In one strongly preferred embodiment of the invention, the chocolate product confectionery product comprises a substantially solid moulded choco-tablet, choco-bar and/or baked product surrounded by substantial amounts of chocolate product. These products are prepared for example by substantially filling a mould with chocolate product and optionally adding inclusions and/or baked product therein to displace chocolate product from the mould (so-called wet shelling processes), if necessary further topping up the mould with chocolate product. For such strongly preferred products of the invention the chocolate product forms a substantial or whole part of the product and/or a thick outside layer surrounding the interior baked product (such as a wafer and/or biscuit laminate). Such solid products where a mould is substantially filled with chocolate are to be contrasted with products that comprise moulded thin chocolate shells which present different challenges.

To prepare a thin-coated chocolate shell a mould is coated with a thin layer of chocolate, the mould being inverted to remove excess chocolate and/or stamped with a cold plunger to define the shell shape and largely empty the mould. The mould is thus coated with a thin layer of chocolate to which further ingredients and fillings may be added to form the interior body of the product.

Unless the context herein clearly indicates, otherwise it will also be well understood by a skilled person that the term chocolate product confectionery as used herein can readily be replaced by and is equivalent to the term chocolate confectionery as used throughout this application and in practice these two terms when used informally herein are interchangeable. However, where there is a difference in the meaning of these terms in the context given herein, then chocolate confectionery and/or compound confectionery are preferred embodiments of the chocolate product confectionery of the present invention, a preferred embodiment being chocolate confectionery.

Preferred chocolate product confectionery may comprise one or more -ingredients, for example selected from the group consisting of: chocolate product(s), compound product(s), chocolate coating(s) and/or compound coating(s). The products may comprise uncoated products such as choco-bar(s) and/or choco-tablet(s) with or without inclusions and/or products coated with chocolate product such as coated biscuits, cakes, wafers and/or other confectionery items. More preferably and/or alternatively any of the aforementioned may comprise one or more cocoa butter replacer(s) (CBR), cocoa-butter equivalent(s) (CBE), cocoa-butter substitute(s) (CBS) and/or any suitable mixture(s) thereof.

In chocolate product confectionery, the cocoa butter (CB) may be replaced by fats from other sources. Such products may generally comprise one or more fat(s) selected from the group consisting of: lauric fat(s) (e.g. cocoa butter substitute (CBS) obtained from the kernel of the fruit of palm trees); non-lauric vegetable fat(s) (e.g. those based on palm or other specialty fats); cocoa butter replacer(s) (CBR); cocoa butter equivalent(s) (CBE) and/or any suitable mixture(s) thereof. Some CBE, CBR and especially CBS may contain primarily saturated fats and very low levels of unsaturated omega three and omega six fatty acids (with health benefits). Thus in one embodiment in chocolate product confectionery of the invention such types of fat are less preferred than CB.

One embodiment of the invention provides a multi-layer product optionally comprising a plurality of layers of baked foodstuff (preferably selected from one or more wafer and/or biscuit layers, and/or one or more fillings layers there between with at least one coating layer located around these layers foodstuff, the coating comprising a chocolate product of or prepared according to the invention.

A further embodiment of the invention provides a chocolate product confectionery product, further coated with chocolate (or equivalents thereof, such as compound) for example a praline, chocolate shell product and/or chocolate coated wafer or biscuit any of which may or may not be layered. The chocolate coating can be applied or created by any suitable means, such as enrobing or moulding. The coating may comprise a chocolate product of or prepared according to the invention.

Another embodiment of the invention provides a chocolate product confectionery product of and/or used in the present invention, that comprises a filling surrounded by an outer layer for example a praline, chocolate shell product.

In another preferred embodiment of the invention the foodstuff comprises a multi-layer coated chocolate product comprising a plurality of layers of wafer, chocolate product, biscuit and/or baked foodstuff, with filling sandwiched between them, with at least one layer or coating being a chocolate product (e.g. chocolate) of the invention. Most preferably the multi-layer product comprises a chocolate product confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

Baked foodstuffs used in the invention may be sweet or savoury. Preferred baked foodstuffs may comprise baked grain foodstuffs which term includes foodstuffs that comprise cereals and/or pulses. Baked cereal foodstuffs are more preferred, most preferably baked wheat foodstuffs such as wafer(s) and/or biscuit(s). Wafers may be flat or shaped (for example into a cone or basket for ice-cream) and biscuits may have many different shapes, though preferred wafer(s) and/or biscuit(s) are flat so they can be usefully be laminated together with a confectionery filling of the invention (and optionally a fruit based filling). More preferred wafers are non-savoury wafers, for example having a sweet or plain flavour.

A non-limiting list of those possible baked foodstuffs that may comprise chocolate compositions that comprise chocolate product of and/or used in the present invention are selected from: high fat biscuits, cakes, breads, pastries and/or pies; such as from the group consisting of: ANZAC biscuit, biscotti, flapjack, kurabiye, lebkuchen, leckerli, macroon, bourbon biscuit, butter cookie, digestive biscuit, custard cream, extruded snacks, florentine, garibaldi gingerbread, koulourakia, kourabiedes, Linzer torte, muffin, oreo, Nice biscuit, peanut butter cookie, polvorón, pizzelle, pretzel, croissant, shortbread, cookie, fruit pie (e.g. apple pie, cherry pie), lemon drizzle cake, banana bread, carrot cake, pecan pie, apple strudel, baklava, berliner, bichon au citron and/or similar products.

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

For all upper and/or lower boundaries of any parameters given herein, the boundary value is included in the value for each parameter unless stated otherwise, i.e. 'less than' means 'less than and including' and 'greater than' means 'greater than and including' but 'less than and not including' means the boundary value is not included. It will also be understood that all combinations of preferred and/or intermediate minimum and maximum boundary values of the parameters described herein in various embodiments of the invention may also be used to define alternative ranges for each parameter for various other embodiments and/or preferences of the invention whether or not the combination of such values has been specifically disclosed herein.

Unless otherwise specified % in the present description correspond to wt%.

It will be understood that the total sum of any quantities expressed herein as percentages cannot (allowing for rounding errors) exceed 100%. For example, the sum of all components of which the composition of the invention (or part(s) thereof) comprises may, when expressed as a weight (or other) percentage of the composition (or the same part(s) thereof), total 100% allowing for rounding errors. However, where a list of components is non exhaustive the sum of the percentage for each of such components may be less than 100% to allow a certain percentage for additional amount(s) of any additional component(s) that may not be explicitly described herein.

The term "substantially" (or `essentially') as used herein may refer to a quantity or entity to imply a large amount or proportion thereof. Where it is relevant in the context in which it is used "substantially" can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" or 'free' may similarly denote that quantity or entity to which it refers comprises no more than 20%, preferably no more than 15%, more preferably no more than 10%, most preferably no more than 5%, especially no more than 2%, for example about 0% of the relevant whole.

The term 'comprising' as used herein will be understood to mean that the list following is non exhaustive and may or may not include any other additional suitable items, for example one or more further feature(s), component(s), ingredient(s) and/or substituent(s) as appropriate. Thus the words 'comprise', 'comprising' and the like are to be construed in an inclusive sense as opposed to an exclusive or exhaustive sense; that is to say, in the sense of 'including, but not limited to'. It should be noted that embodiments and features described in the context of one of the aspects of the present invention also apply to the other aspects of the invention.

The invention will now be described in further details in the following non-limiting examples. The following Examples are provided for illustrative purposes only and they are not to be considered in any way limiting to the scope of the present invention.

It should be understood that various changes and modifications to the presently preferred embodiments described herein will be apparent to those skilled in the art. Such changes and modifications can be made without departing from the scope of the present invention and without diminishing its attendant advantages. It is therefore intended that such changes and modifications be covered by the appended claims.

### Experimental Section

### Examples

The following examples are illustrative of the products and methods of making the same falling within the scope of the present invention. They are not to be considered in any way limitative of the invention. Changes and modifications can be made with respect to the invention. That is the skilled person will recognise many possible variations in these examples covering a wide range of compositions, ingredients, processing methods and mixtures and can adjust the naturally occurring levels of the compounds of the invention for a variety of applications.

### Preparatory Example 1

Skimmed milk powder is reconstituted at total solids content of 55-60% and heated to 45°C for 20 minutes. An enzyme is contacted with the milk substrate for 60°C and 1 hour. The enzyme is deactivated and the solution pasteurized using 80°C for 10 minutes. Homogenization is then carried out and the solution spray dried to form a powder. The enzymes used were Maxilact^{®} A4 from DSM.

In Example 1, the enzyme was used at 3.2wt% of the lactose content of the skimmed milk powder.

In Example 1 the GOS yield was 26wt% of the carbohydrate mixture. The GOS yield was measured according to AOAC 2001.02.

### Examples 2 and 3 and Reference Examples 1 to 3

Chocolate compositions were made to the following recipes:

| **Ingredient** | **Reference 1** | **Reference 2** | **Reference 3** | **Example 1** | **Example 2** |
|---|---|---|---|---|---|
| Sugar | 43.85 | 34.32 | 34.32 | 34.32 | 29.3 |
| Cocoa butter | 16.05 | 16 | 16 | 16 | 24.2 |
| Skimmed milk powder | 15.49 | 31.52 | | | |
| Lactose free SMP | | | 31.52 | | |
| Powder from Example 1 | | | | 31.52 | 39.3 |
| Cocoa mass | 13.4 | 13.4 | 13.4 | 13.4 | |
| Milk fat | 4.43 | 4.2 | 4.2 | 4.2 | 6.5 |
| Whey powder | 6.22 | | | | 0.1 |
| Lecithin | 0.51 | 0.51 | 0.51 | 0.51 | 0.6 |

The chocolates were manufactured using a standard technique.

### Example 4

A commercially available GOS source from Clasado was analysed using the method of International Journal of Analytical Chemistry, Volume 2014, Article ID 768406 and provided the following saccharide distribution (wt%), DP2 32.8%, DP3 39.3%, DP4 17.9%, DP5 7.4% and DP6 2.6% based on the DP2-6 content. Such a GOS source may be used in the carbohydrate mixture of the present invention.

### Examples 5-6 and Reference Examples 4-10

The following recipes (all % by weight) were prepared using the following process and procedures:
A 3-cylinder refiner was used to refine a mixture of the dry ingredients and milk solids.

The refined composition was then subjected to conching in an Lipp Conche with the following parameters: Before starting the conching step, add 15-20% of the cocoa butter into the conche, process at 55 °C, time 10 minutes, 500 rotations/minute, and then change the rotation to 1200 rotations/ minute. Process for 220 minutes. Add the remainder of cocoa butter and the lecithin and change the rotation to 1500 rotations/ minute and process for a further 10 minutes.

The chocolate was then tempered at 29.8°C by hand on a marble-topped table.

The powdered commercially available GOS source used was from Example 4.

The samples were assessed by a panel of trained panellists using the following procedure.

The tasting was conducted in 2 sessions of 2 hours each. In the first session the panellists assessed the flavour of the 9 samples and in the second session the appearance and texture of the full set.

In the first session, panellists were given 1 square of each sample presented in a randomised design. They were asked to fully eat each piece in order to assess the flavour. The evaluation was done under red lights to mask colour differences.

In the second session, panellists were given 1 square and a half of each sample presented in a randomised design and they were asked to fully eat each piece in the following way:
the full square to assess the appearance and the texture, and
the half square to assess melting time and mouth coating.

The panellists gave the samples a score from 0-10 with positive properties being beneficial with higher scores and negative properties with lower scores. The data was assessed using Monadic methodology.

As can be seen from the results below, the present invention offers a significant reduction in sugar contents without a significant reduction in organoleptic properties. This is very surprising given the established problems in replacing sugar and the issues expected with introducing a dietary fibre-based bulking agent into chocolate - a product where the organoleptic properties are very important, i.e. mouthfeel.

The present invention gave comparable or superior results to reference examples with significantly superior sugar reduction values.

| **Ingredient** | **Example 5** | **Reference 4** | **Example 6** | **Reference 5** | **Reference 6** | **Reference 7** | **Reference 8** | **Reference 9** | **Reference 10** |
|---|---|---|---|---|---|---|---|---|---|
| Sucrose | 29.40 | 39.45 | 29.40 | 29.40 | | | 39.45 | 29.40 | 45.2 |
| Cocoa Butter | 17.9 | 18.0 | 17.90 | 17.9 | 17.9 | 18.0 | 18.0 | 17.90 | 17.9 |
| Skimmed Milk Powder | | 23.74 | | 33.89 | | | | | |
| Cocoa Mass | 13.0 | 13.0 | 13.0 | 13.0 | 13.0 | 13.0 | 13.0 | 13.0 | 13.0 |
| Milk Fat | 4.30 | 5.39 | 4.45 | 5.39 | 4.30 | 4.6 | 4.60 | 4.30 | 4.3 |
| Lecithin | 0.42 | 0.42 | 0.42 | 0.42 | 0.42 | 0.42 | 0.42 | 0.42 | 0.42 |
| Milk Protein concentrate | 19.18 | | 17.44 | | 19.18 | 13.53 | 13.53 | | 19.18 |
| Lactose | | | | | 45.20 | 50.45 | 11.00 | 15.80 | |
| Glucose | | | 4.39 | | | | | | |
| GOS | 15.80 | | 13.00 | | | | | | |
| Sugar Reduction/% | 39.76 | 0 | 31.5 | 9.2 | 9.2 | 0 | 0 | 9.2 | 9.2 |

| **Property** | **Example 5** | **Reference 4** | **Example 6** | **Reference 5** | **Reference 6** | **Reference 7** | **Reference 8** | **Reference 9** | **Reference 10** |
|---|---|---|---|---|---|---|---|---|---|
| Milk-taste | 3.44 | 4.81 | 3.28 | 4.67 | 1.99 | 2.01 | 3.91 | 3.02 | 4.04 |
| Sweet-taste | 6.73 | 7.38 | 6.98 | 6.36 | 2.56 | 2.76 | 7.23 | 6.84 | 7.41 |
| Salty-taste | 0.1 | 0.86 | 0.01 | 1.63 | 0.22 | 0.34 | 0.13 | 0.11 | 0.11 |
| Off flavour | 0.01 | 0 | 0.59 | 0.18 | 1.12 | 0.84 | 0.23 | 0.01 | 0 |
| Overall after taste | 4.51 | 5.22 | 4.43 | 5.09 | 3.01 | 3.21 | 4.7 | 4.36 | 4.59 |
| Colour Intensity | 5.9 | 4.84 | 5.61 | 4.68 | 5.16 | 5.95 | 5.55 | 5.61 | 5.36 |
| Gloss | 5.37 | 4.75 | 5.38 | 5.05 | 4.3 | 5.36 | 4.92 | 5.25 | 5.15 |
| Crumbly | 3.39 | 2.18 | 3.17 | 2.48 | 3.47 | 2.37 | 3.26 | 3.9 | 3.25 |
| Gritty | 3.89 | 1.73 | 4.78 | 1.96 | 3.17 | 3.2 | 4.22 | 5.08 | 4.21 |
| Dry | 5.14 | 2.85 | 4.31 | 3.84 | 5.61 | 4.65 | 3.56 | 4.74 | 4.45 |
| Sticky | 4.35 | 3.94 | 3.06 | 5.2 | 5.08 | 4.93 | 2.8 | 2.73 | 3.2 |
| Pasty | 3.2 | 1.72 | 2.33 | 3.02 | 6 | 6.35 | 1.74 | 1.64 | 1.83 |
| Melting Time | 4.42 | 3.84 | 4.18 | 4.2 | 5.11 | 4.71 | 4.61 | 4.56 | 4.23 |
| Mouth Coating | 4.27 | 3.75 | 3.45 | 4.68 | 5.25 | 5.79 | 3.85 | 3.59 | 3.47 |
| Sum of undesirable organoleptic properties | 19.97 | 12.42 | 17.65 | 16.5 | 23.33 | 21.5 | 15.58 | 18.09 | 16.94 |

## Claims

1. A confectionery material comprising a carbohydrate mixture derived from a milk product, wherein the carbohydrate mixture is present in an amount greater than 0wt% and less than or equal to 35wt% of the confectionery material and the carbohydrate mixture comprises galactooligosaccharides in an amount of 10-100wt%, of the carbohydrate mixture, wherein the confectionery material comprises at least 1.0% and less than 32.5% by weight of the material of non-carbohydrate milk solids and at most 40wt% of the carbohydrate mixture is lactose.

2. A confectionery material according to claim 1, wherein at least 1.0% and less than 32.5% by weight of the confectionery material is the carbohydrate mixture.

3. A confectionery material according to any of claims 1 to 2 where at most 30wt% of the carbohydrate in the mixture is lactose.

4. A confectionery material according to any of claims 1 to 3, wherein from 0wt% to 15wt% of the total carbohydrates in the mixture is lactose.

5. A confectionery material according to any of claims 1 to 4, wherein the carbohydrate mixture is a composition expressed as dry matter percentage by weight of the mixture:
a. Lactose 0-40%
b. Glucose 0-40%
c. Galactose 0-40%
d. Galactooligosaccharides, 10-80%.

6. A confectionery material according to any of claims 1 to 5, wherein the carbohydrate mixture is a composition expressed as dry matter percentage by weight of the mixture:
a. Lactose 3-20%
b. Glucose 10-30%
c. Galactose 1-10%
d. Galactooligosaccharides, 45-70%.

7. A confectionery material according to any of claims 1 to 6, wherein the confectionery material comprises a milk product the milk product comprises greater than 10wt% and less than 90wt% of the carbohydrate mixture by weight of the milk product.

8. The confectionery material according to claim 7, wherein the milk product comprises greater than 20wt% and less than 60wt% of the carbohydrate mixture by weight of the milk product and the remainder of the milk product is non-carbohydrate milk solids.

9. A confectionery material according to any of claims 1 to 8, wherein the material is selected from the group consisting of chocolate, compound, pralines, water- or fat-based confectionery fillings, ganache, toffee, fudge, caramel analogues, chocolate truffles, Scottish tablet, and hard candy.

10. A confectionery material according to any of claims 1 to 9, wherein the confectionery material is a milk chocolate or a white chocolate.

11. A process for preparing a confectionery material of any of claims 1 to 10 comprising the steps of:
(a) providing a milk substrate comprising a total solids content of between 40wt% and 75wt%, preferably wherein the milk substrate comprises at least 15wt% lactose based on a dry solids content;
(b) treating the milk substrate with an enzyme having transglycosylation activity, and
(c) optionally fully or partially inactivating the enzyme.

12. The process of claim 11, wherein the solution prepared is dried to provide a solid for combination with other ingredients of the confectionery material.

## Patentansprüche

1. Süßwarenmaterial, umfassend eine Kohlenhydratmischung, die aus einem Milchprodukt gewonnen wird, wobei die Kohlenhydratmischung in einer Menge von mehr als 0 Gew-% und weniger als oder gleich 35 Gew.-% des Süßwarenmaterials vorhanden ist und die Kohlenhydratmischung Galactooligosaccharide in einer Menge von 10-100 Gew.-% der Kohlenhydratmischung umfasst, wobei das Süßwarenmaterial mindestens zu 1,0 Gew.-% und weniger als 32,5 Gewichtsprozent des Materials nicht kohlenhydrathaltige Milchfeststoffe umfasst und höchstens 40 Gew.-% der Kohlenhydratmischung Laktose sind.

2. Süßwarenmaterial nach Anspruch 1, wobei mindestens 1,0 Gew.-% und weniger als 32,5 Gew.-% des Süßwarenmaterials die Kohlenhydratmischung sind.

3. Süßwarenmaterial nach einem der Ansprüche 1 bis 2, wobei höchstens 30 Gew.-% des Kohlenhydrats in der Mischung Laktose sind.

4. Süßwarenmaterial nach einem der Ansprüche 1 bis 3, wobei von 0 Gew.-% bis 15 Gew.-% der gesamten Kohlenhydrate in der Mischung Laktose sind.

5. Süßwarenmaterial nach einem der Ansprüche 1 bis 4, wobei die Kohlenhydratmischung eine Zusammensetzung ist, die als Trockenmasseprozentsatz ausgedrückt wird, bezogen auf das Gewicht der Mischung:
a. Laktose 0-40 %
b. Glukose 0-40 %
c. Galaktose 0-40 %
d. Galactooligosaccharide, 10-80 %.

6. Süßwarenmaterial nach einem der Ansprüche 1 bis 5, wobei die Kohlenhydratmischung eine Zusammensetzung ist, die als Trockenmasseprozentsatz ausgedrückt wird, bezogen auf das Gewicht der Mischung:
a. Laktose 3-20 %
b. Glukose 10-30 %
c. Galaktose 1-10 %
d. Galactooligosaccharide, 45-70 %.

7. Süßwarenmaterial nach einem der Ansprüche 1 bis 6, wobei das Süßwarenmaterial ein Milchprodukt umfasst, wobei das Milchprodukt mehr als 10 Gew.-% und weniger als 90 Gew.-% der Kohlenhydratmischung umfasst, bezogen auf das Gewicht des Milchprodukts.

8. Süßwarenmaterial nach Anspruch 7, wobei das Milchprodukt mehr als 20 Gew.-% und weniger als 60 Gew.-% der Kohlenhydratmischung umfasst, bezogen auf das Gewicht des Milchprodukts, und der Rest des Milchprodukts nicht aus Kohlenhydraten bestehende Milchfeststoffe sind.

9. Süßwarenmaterial nach einem der Ansprüche 1 bis 8, wobei das Material aus der Gruppe ausgewählt ist, bestehend aus Schokolade, Gemisch, Pralinen, Süßwarenfüllungen auf Wasser- oder Fettbasis, Ganache, Toffee, Fudge, Karamellanaloga, Schokoladentrüffeln, schottischem Tablet und Bonbons.

10. Süßwarenmaterial nach einem der Ansprüche 1 bis 9, wobei das Süßwarenmaterial eine Milchschokolade oder eine weiße Schokolade ist.

11. Prozess zum Herstellen eines Süßwarenmaterials nach einem der Ansprüche 1 bis 10, umfassend die Schritte:
(a) Bereitstellen eines Milchsubstrats, umfassend einen Gesamtfeststoffgehalt zwischen 40 Gew.-% und 75 Gew.-%, vorzugsweise wobei das Milchsubstrat mindestens zu 15 Gew.-% Laktose umfasst, basierend auf dem Trockenfeststoffgehalt;
(b) Behandeln des Milchsubstrats mit einem Enzym, das Transglykosylierungsaktivität aufweist, und
(c) optional vollständiges oder teilweises Inaktivieren des Enzyms.

12. Prozess nach Anspruch 11, wobei die hergestellte Lösung getrocknet wird, um einen Feststoff für eine Kombination mit anderen Zutaten des Süßwarenmaterials bereitzustellen.

## Revendications

1. Matière de confiserie comprenant un mélange de glucides dérivé d'un produit laitier, dans laquelle le mélange de glucides est présent dans une quantité supérieure à 0 % en poids et inférieure ou égale à 35 % en poids de la matière de confiserie et le mélange de glucides comprend des galacto-oligosaccharides dans une quantité de 10 à 100 % en poids du mélange de glucides, dans laquelle la matière de confiserie comprend au moins 1,0 % et moins de 32,5 % en poids de la matière de matière sèche du lait non glucidique et au plus 40 % en poids du mélange de glucides est du lactose.

2. Matière de confiserie selon la revendication 1, dans laquelle au moins 1,0 % et moins de 32,5 % en poids de la matière de confiserie est le mélange de glucides.

3. Matière de confiserie selon l'une quelconque des revendications 1 à 2, où au plus 30 % en poids des glucides dans le mélange est du lactose.

4. Matière de confiserie selon l'une quelconque des revendications 1 à 3, dans laquelle de 0 % en poids à 15 % en poids du total des glucides dans le mélange est du glucose.

5. Matière de confiserie selon l'une quelconque des revendications 1 à 4, dans laquelle le mélange de glucides est une composition exprimée en pourcentage de matière sèche en poids du mélange :
a. Lactose 0 à 40 %
b. Glucose 0 à 40 %
c. Galactose 0 à 40 %
d. Galacto-oligosaccharides, 10 à 80 %.

6. Matière de confiserie selon l'une quelconque des revendications 1 à 5, dans laquelle le mélange de glucides est une composition exprimée en pourcentage de matière sèche en poids du mélange :
a. Lactose 3 à 20 %
b. Glucose 10 à 30 %
c. Galactose 1 à 10 %
d. Galacto-oligosaccharides, 45 à 70 %.

7. Matière de confiserie selon l'une quelconque des revendications 1 à 6, dans laquelle la matière de confiserie comprend un produit laitier, le produit laitier comprend plus de 10 % en poids et moins de 90 % en poids du mélange de glucides en poids du produit laitier.

8. Matière de confiserie selon la revendication 7, dans laquelle le produit laitier comprend plus de 20 % en poids et moins de 60 % en poids du mélange de glucides en poids du produit laitier et le reste du produit laitier est constitué de matière sèche du lait non glucidique.

9. Matière de confiserie selon l'une quelconque des revendications 1 à 8, dans lequel la matière est choisie dans le groupe constitué de chocolat, de composés, pralines, de garnitures de confiserie à base d'eau ou de graisse, de ganache, de caramel, de fudge, d'analogues du caramel, de truffes au chocolat, de sucre à la crème et de bonbons durs.

10. Matière de confiserie selon l'une quelconque des revendications 1 à 9, dans laquelle la matière de confiserie est du chocolat au lait ou du chocolat blanc.

11. Procédé de préparation d'une matière de confiserie selon l'une quelconque des revendications 1 à 10 comprenant les étapes consistant à :
(a) fournir un substrat laitier comprenant une teneur totale en solides comprise entre 40 % en poids et 75 % en poids, de préférence dans lequel le substrat laitier comprend au moins 15 % en poids de lactose sur la base d'une teneur en solides secs ;
(b) traiter le substrat de lait avec une enzyme ayant une activité de transglycosylation, et
(c) éventuellement, désactiver totalement ou partiellement l'enzyme.

12. Procédé selon la revendication 11, dans lequel la solution préparée est séchée pour fournir un solide à combiner avec d'autres ingrédients de la matière de confiserie.
